Europäisches Patentamt

**European Patent Office**

Office européen des brevets

(11) Veröffentlichungsnummer: **0 044 985**
**B1**

## (12) EUROPÄISCHE PATENTSCHRIFT

(45) Veröffentlichungstag der Patentschrift:
**19.09.84**

(51) Int. Cl.³: **F 16 B 2/22**, E 04 B 1/49,
F 24 D 19/02, B 25 C 1/00

(21) Anmeldenummer: **81105395.8**

(22) Anmeldetag: **10.07.81**

(54) Verfahren zum Befestigen von Fussboden-Heizungsrohren, Halter und Schaumstoffisolierplatte zum Befestigen nach diesem Verfahren und Gerät zur Durchführung dieses Verfahrens.

(30) Priorität: **24.07.80 DE 3028101**

(43) Veröffentlichungstag der Anmeldung:
**03.02.82 Patentblatt 82/5**

(45) Bekanntmachung des Hinweises auf die Patenterteilung:
**19.09.84 Patentblatt 84/38**

(84) Benannte Vertragsstaaten:
**AT BE CH DE FR GB IT LI LU NL SE**

(56) Entgegenhaltungen:
**EP - A - 0 000 484
EP - A - 0 004 491
EP - A - 0 007 534
EP - A - 0 008 749**

(73) Patentinhaber: **Gebrüder Kömmerling Kunststoffwerke GmbH, Zweibrückerstrasse 200, D-6780 Pirmasens (DE)**

(72) Erfinder: **Drum, Gerd, Lessingstrasse 16, D-6781 Höhfröschen (DE)**
Erfinder: **Denzer, Heinz, Hauptstrasse 61, 6751 Schopp (DE)**
Erfinder: **Weid, Jürgen, Amselstrasse 46, 6783 Dahn (DE)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

## Beschreibung

Die Erfindung betrifft ein Verfahren zum Befestigen von drehbaren und nicht beziehungsweise nur wenig drehbaren Haltern gem. dem Oberbegriff des Anspruchs 1. Ferner betrifft die Erfindung einen Halter zur Durchführung dieses Verfahrens und ein Gerät zum Eintreiben des Halters.

Man ist in den letzten Jahren dazu übergegangen, aus Gründen der Energieersparnis und besseren Wärmenutzung Fußboden- und Wandheizungen zu verlegen. Beim Einbau einer Fußbodenheizung wird auf den Fußboden eines Rohbaus zunächst eine Wärmedämmschicht aufgetragen, die gleichzeitig als Tritt- und Luftschalldämmung dient und bevorzugt eine Stärke von z. B. 40 bis 60 mm aufweist. Als Material hierzu dient in der Regel ein Polystyrolschaum. Die Wärmedämmschicht besteht normalerweise aus Platten, die auf der Oberseite mit dünnem Aluminiumblech von z. B. 0,5 mm Dicke beschichtet sind. Über diesem wird ein Kunststoff-Rohrsystem eben ausgelegt und von dem anschließend aufgegossenen Estrich umschlossen.

Hierbei ist es allerdings wünschenswert, daß das Rohrsystem beim Aufgießen des Estrichs in seiner Lage etwas oberhalb des Aluminiumblechs fixiert bleibt. Deshalb wurden über der Wärmedämmschicht Platten ausgelegt, die zur Befestigung von Rohrhaltern dienen, welche ihrerseits die Kunststoffrohre halten sollen.

Bei der Montage der Heizung werden somit zunächst die mit federnden Backen versehenen Rohrhalter auf dem Fußboden gemäß einem vorher erstellten Verlegeplan befestigt, und anschließend werden die Kunststoffrohre zwischen die Backen der Halter eingedrückt.

Bevorzugt wird die Oberseite des Aluminiumblechs zur Bildung einer Dampfsperre mit einer Abdeckfolie versehen, und zwar vornehmlich aus Polyäthylen (PE) in einer Stärke von ca. 0,2 mm.

Um eine einfache Montage zu ermöglichen, hat man bisher ein Aluminiumblech verwendet, das in einem Rastermuster gelocht war, wobei die Halter mit Dornen versehen waren, die federnde Rastnasen aufwiesen und jeweils zur Größe der Lochungen passend derart bemessen waren, daß zum Befestigen eines Halters lediglich dessen Dorn durch das Loch in den Schaumkunststoff eingeschoben zu werden brauchte, siehe DE-B-2 713 251.

Dieses Vorgehen weist eine Reihe von Nachteilen auf:

— Es ist erforderlich, geeignetes Aluminiumblech zunächst mit Lochungen zu versehen.
— Wenn die Lochungen ein nur sehr grobes Rastermuster bilden, dann erfolgt zwangsläufig das Verlegen des Heizungsrohrsystems nicht gemäß dem Verlegeplan, sondern nur in Annäherung an diesen gemäß dem Rastermuster.
— Verwendet man eine Lochung mit engem Raster, dann wird zwar das Verlegen des Rohrsystems erleichtert, das Aluminiumblech liefert aber wegen der vielen Lochungen nicht mehr die angestrebte, gleichmäßige Temperaturverteilung.
— Die über dem gelochten Aluminiumblech üblicherweise als Dampfsperre vorgesehene Schutzfolie kann bei den Verlegearbeiten leicht beschädigt werden, so daß keine einwandfreie Dampfsperre mehr gegeben ist, da Feuchtigkeit durch die Löcher des Aluminiumbleches gelangen kann.

Die Erfindung liefert ein schnell und einfach durchführbares Verfahren, durch das die genannten Nachteile ausgeräumt werden, sowie einen Halter zur Durchführung des Verfahrens und ein Gerät zum Eintreiben der Halter.

Gemäß dem erfindungsgemäßen Verfahren wird der Halter mit der Spitze des Dorns durch das an der Einsteckstelle ungelochte Aluminiumblech und gegebenenfalls die z. B. aus PE bestehende Abdeckfolie hindurchgetrieben.

Bei der Erfindung wird zunächst ein vollkommen ungelochtes Aluminiumblech, das ggf. mit einer geeigneten Abdeckfolie bedeckt ist, ausgelegt. Als nächstes werden gemäß dem Verlegeplan die Halter längs des gewünschten Rohrverlaufs mit ihrem Dorn eingetrieben, wobei der Dorn an der betreffenden Stelle das Aluminiumblech durchdringt. Das perforierte Aluminiumblech wird durch den Dorn bei dessen Eintreiben auseinandergedrückt, bis es beim Erreichen der Hinterschneidung in diese ein wenig zurückfedert. Der Dorn ist somit ausreichend fest in das Aluminiumblech eingerastet.

Das erfindungsgemäße Verfahren ermöglicht die Verwendung üblichen Hüttenblechs (das natürlich nicht zu hart und/oder dick sein darf) ohne nachträgliche Metallbearbeitung, läßt dem Konstrukteur beim Erstellen des Verlegeplans völlig freie Hand und liefert eine optimale Wärmeverteilung. Soweit das Aluminiumblech mit einer Kunststoffschicht bedeckt ist, ist deren Beschädigung beim Verlegen weitgehend unschädlich da das Blech dann die Aufgabe der Dampfsperre übernimmt.

Das Blech ist vorteilhaft mit den Schaumstoffplatten verklebt. Es läßt sich selbst bei halbharter Ausführung und einer Dicke im Bereich von 0,5 mm von einem Kunststoffdorn der hier infrage kommenden Größe (z. B. 10 mm Länge) noch von Hand durchstoßen.

Das erfindungsgemäße Verfahren ermöglicht zusätzlich den Einsatz mechanisch oder pneumatisch betriebener Geräte zum raschen und problemlosen Eintreiben der Halter, die ein Bücken oder Knien des Personals beim Eintreiben überflüssig machen. Es kommt im Einzelfall nicht darauf an, einen Halter millimetergenau zu setzen, da der Verlegeplan erhebliche Toleranzen zuläßt. Die bisher bekannten Halter die in vorhandene Lochungen eingeführt werden mußten, mußten dagegen jeweils genau auf das zugehörige Loch vor dem Eindrücken ausgerichtet werden, um Beschädigungen des Halters zu vermeiden. Somit gestattet das erfindungsgemäße Verfahren, gemäß welchem als zusätzlicher Verfahrensschritt beim Setzen eines Halters auch die jeweilige Lochung vorzunehmen ist, ein rascheres Verlegen als das bekannte Verfahren, bei welchem bereits vorgelochte Bleche verwendet wurden.

Gemäß bevorzugten Ausgestaltungen des erfindungsgemäßen Verfahrens wird vor dem Hindurchtreiben der Dorne auf das Aluminiumblech bzw. die ggf. vorhandene Schutzfolie ein Raster aufgebracht bzw. aufgedruckt. Dieses Raster dient dem noch präziseren, aber auch rascheren Setzen der Halter gemäß einem Verlegeplan.

Zur Durchführung des Verfahrens wird erfindungsgemäß ein Halter vorgeschlagen, dessen angespitzter, hinterschnittener Befestigungsdorn aus hartem Werkstoff besteht und/oder mit Schneidkanten ausgebildet ist, so daß der Befestigungsdorn selbst das Lochen des Aluminiumbleches bewirkt.

Gemäß einer Ausgestaltung der Erfindung ist es von Vorteil, daß der Befestigungsdorn mindestens an der Spitze aus einem Material hoher Festigkeit, z. B. Stahl oder hartem Aluminium gebildet ist und in den Halter aus Kunststoff eingespritzt oder eingesteckt ist. Als Kunststoff kommt hierbei bevorzugt Polyäthylen hoher Dichte, Polypropylen, ABS, Polycarbonat oder Polyamid in Frage. Das ist vor allem bei sehr festen oder sehr dickem Aluminiumblech von Vorteil.

Das Bestandteil aus dem Material mit höherer Festigkeit kann derart ausgebildet sein, daß eine Einrichtung zum schnellen Setzen der Halter mit einem Stempel oder dergleichen unmittelbar auf das Metallteil einwirkt, so daß ein sehr nachgiebiger Kunststoff für jenen Teil des Halters verwendet werden kann, der zum Ergreifen der Kunststoffrohre dient.

Es wird gemäß einer alternativen Ausgestaltung der Erfindung bevorzugt, daß Befestigungsdorn und Halter aus einem harten Kunststoff einstückig gespritzt sind. Als Kunststoffe kommen hierzu wiederum Polyäthylen hoher Dichte, Polypropylen, ABS, Polyamid oder Polycarbonat in Frage. So lassen sich z. B. mit Dornen aus Polycarbonat halbharte Aluminiumbleche von 0,5 mm Dicke ohne Schwierigkeiten lochen.

Soll der Halter drehbar sein, so hat der Befestigungsdorn vorteilhaft die Form eines spitzen Kegels oder einer steilen Pyramide. Die Pyramidenform hat den Vorteil, daß die zur Spitze hin verlaufenden Kanten beim Eindringen in das Aluminiumblech in gewissem Umfang schneidend wirken, was den Eindringwiderstand verringert.

Daher ist es gemäß einer weiteren Ausgestaltung der Erfindung besonders von Vorteil, daß der Befestigungsdorn mit nur drei Schneidkanten ausgebildet ist und eine axial symmetrische Pyramide mit einem Schlankheitsgrad von 1,6 bis 1,7 bildet. Diese Ausgestaltung liefert Schneidkanten mit einem Schneidwinkel, dessen Selbstschneideeffekt beim Einpressen zuläßt, daß die Einpreßkraft gegenüber anderen Formen wesentlich verringert wird, wobei das eingeschnittene Aluminium in den Raum zwischen der Grundfläche der Pyramide und dem unteren Teil des Halteteils (in den hinterschnittenen Bereich) zurückfedert. Hierdurch wird ein ausreichend fester Sitz des Halters erreicht, wobei jedoch die Drehbarkeit erhalten wird, da selbst bei dreikantiger Ausführung des Dornes der Schaumstoff dem Drehen keinen störenden Widerstand leistet.

Ist beispielsweise das zu verlegende Rohr sehr steif (was im Winter der Fall sein kann) oder ist das Aluminiumblech besonders weich und dünn, so kann es vorkommen, daß die oben erläuterten Dorne beim Verlegen des Rohres wieder ausgerissen werden.

Diese Gefahr ist bei der nachfolgend beschriebenen Dornausbildung nicht gegeben. Diese weist einen derartig zuverlässigen Sitz auf, daß der Halter selbst bei ungünstiger Belastung und Verwendung eines dünnen Aluminiumblechs nicht ausgezogen werden kann. Bei dieser Ausführung ist der Dorn spatenförmig und trägt an den rückwärtigen Enden seiner Schmalseiten elastische nach außen geneigte Widerhaken.

Wegen der spatenförmigen Ausbildung wird das Blech beim Eintreiben des Halters zuerst linienförmig aufgerissen, so daß sich das perforierte Blech längs der Perforierungslinie in Eindringrichtung des Dornes umbördelt. Nach Fertigstellung des Eintreibvorgangs ist somit die Perforierung durch zwei Kanten begrenzt, welche jeweils durch eine Umbördelung derart verstärkt sind, daß ein Einreißen dieser Kanten nicht möglich ist. Um den Perforationswiderstand zu verringern kann man die Schneide des Dorns in der Mitte etwas vorziehen, so daß das Aluminiumblech nicht auf der ganzen Länge der Schneide auf einmal aufgerissen werden muß.

Bedingt durch die Dicke des Dornes bilden sich quer zu den von den Keilflächen des Dornes eingebördelten Begrenzungsflächen der Perforation gradlinige weniger eingebördelte Begrenzungskanten; in deren Bereich stützt sich der Halter über die Widerhaken ab, so daß bei Ausüben einer ungünstigen Belastung auf die Rohraufnahme des Halters alle Kräfte, die in Längsrichtung der Schneide ausgeübt werden, über die stumpfen Enden der Widerhaken von unten her auf das Aluminiumblech übertragen werden, so daß ein außerordentlich fester Sitz erzielt wird. Der Halter ist zwar nicht beliebig aber immer noch in ausreichendem Maße drehbar, um Fluchtfehler bei ungenauem Eintreiben auszugleichen.

Gemäß einer weiteren Ausgestaltung der Erfindung ist es von Vorteil, daß der Dorn die Form eines sehr steilen Firstdaches (Satteldach, Giebeldach) aufweist; die hierbei gerade und vorzugsweise senkrecht zur Eintreibrichtung verlaufende Schneide hat in Versuchen sehr gute Festigkeitseigenschaften und Eindringfähigkeit bei hohem Ausreißwiderstand gezeigt.

Wenn auch der Dorn im Schnitt senkrecht zur Eintreibrichtung z. B. faßförmigen Querschnitt haben kann, wird es bevorzugt, daß der Dorn einen rechteckigen Querschnitt aufweist, wobei nicht nur die Flanken des Dornes, sondern auch die Stirnflächen der Widerhaken beim Herstellen der Perforation über die ganze Länge gleichmäßig auf das Aluminiumblech einwirken und somit die Entstehung einer Perforation mit genau definierter Formgebung fördern.

Gemäß einer Ausgestaltung der Erfindung läßt ein den Dorn tragender Hals neben sich Platz zum Einfedern der Widerhaken hinter die Kontur des Dornendes und ragt von einem an die Aufnahme angrenzenden Halteabschnitt ab, dessen Querschnitt zur Abstützung des Halters in der Perforation etwa dem Querschnitt des Dornendes entspricht. Der in das Aluminiumblech eingeschlossene Halter steht somit mit den Flanken seines Halteabschnitts in ständiger Flächenberührung mit den eingebördelten Rändern der Perforation und wirkt einem Ausreißen entgegen.

Die fertiggestellte Perforation weist quadratischen oder rechteckigen Querschnitt auf, wobei Einrißstellen lediglich in den Ecken der Perforation auftreten. Um zu vermeiden, daß diese Einrißstellen mehr als unvermeidbar belastet werden, sind bei einer weiteren Ausbildungsform der Erfindung am Querschnitt des Halteabschnitts die Ecken abgeschrägt.

Durch geeignete Dimensionierung des Halteabschnitts und insbesondere seiner abgeschrägten Ecken wird die Verdrehbarkeit des Halters innerhalb der Perforation erhöht, so daß der erfindungsgemäße Kunststoffhalter in ausreichendem Maße an die jeweilige Fluchtrichtung der Rohrleitung angepaßt werden kann. Hierbei können nach wie vor scharfe, gegen die Ränder der Perforierung einwirkende Kanten vermieden werden.

Da beim Verlegen der Rohrleitung oft in deren Axialrichtung, die der Axialrichtung der Aufnahme entspricht, Kraft auf bereits eingesetzte Halter aufgebracht wird, ist es gemäß einer weiteren Ausgestaltung der Erfindung von Vorteil, daß die Schneide des spatenförmigen Dornes quer zur Achse der Aufnahme angeordnet ist, so daß die Flanken bzw. Flachseiten des Dornes, die gegen die eingebördelten Ränder der Perforation anliegen, die auf den Halter ausgeübten Kräfte in das Aluminiumblech einleiten. Die zwangsläufig schwächer ausgeführten Widerhaken werden hierbei nur insoweit belastet, als sie dem Ausziehen des Halters entgegenwirken.

Gemäß einer weiteren Ausgestaltung der Erfindung ist der gegenseitige Abstand der Außenflächen der Widerhaken an deren freien Enden größer als an deren Wurzel. Diese divergierenden Schmalseiten sorgen beim Eindringen des Dornes in das Aluminiumblech dafür, daß auch längs dieser Schmalseiten das Aluminiumblech nach unten umgebördelt wird; hierbei ist die Länge der Widerhaken auf die Abschrägung derart abgestimmt, daß sich beim eingetriebenen Halter die nach außen gefederten Widerhaken genau auf den Rand der umgebördelten Partien abstützen, wodurch ein weiters Einreißen der Perforation noch besser verhindert ist.

Um das Zurückfedern des eingeschnittenen Aluminiumbleches zu erleichtern, ist gemäß einer weiteren Ausgestaltung der Erfindung der Halter mit einer federnden Auflageplatte versehen, welche sich quer zum Befestigungsdorn erstreckt und auf ihrer diesem zugewandten Seite konkav aufgebildet ist. Wird der Halter gesetzt, dann dringt zunächst die Spitze des Befestigungsdornes weiter durch das eingestochene Loch im Aluminiumblech ein, als dies dessen Dicke entspricht, da sich die Auflageplatte durchbiegt. Beim Freigeben des Halters federt diese zurück und drückt den vorspringenden Teil der Spitze von unten her fest gegen die mittlerweile zurückgefederten Ränder und Grate des eingestochenen Loches. Es ist auch die Kompensierung unterschiedlicher Stärken des Aluminiumbleches möglich.

Die Erfindung umfaßt auch die obenerwähnte Einrichtung zum Eindrücken der Halter. Die Einrichtung besteht aus einem Gerät mit einem Handgriff, einem Setzkolben in einer Führung, einem Magazin für die Halter und einem durch einen Bügel auslösbaren Antrieb für den Setzkolben, siehe z. B. EP-A-0 008 749. Das Gerät ist gekennzeichnet durch die Merkmale im zweiten Teil des Anspruchs 14.

Der Gegenstand der Erfindung ist anhand der schematischen Zeichnung beispielsweise noch näher erläutert; es zeigt

Fig. 1 eine Ausführungsform eines erfindungsgemäßen Halters mit Punktspitze im Schrägbild,

Fjg. 2 eine andere Ausführungsform eines erfindungsgemäßen Halters mit Punktspitze im Schrägbild,

Fig. 3 eine teilweise im Schnitt gezeigte, schematische Darstellung einer erfindungsgemäßen Einrichtung zum Setzen erfindungsgemäßer Halter,

Fig. 4 die in Fig. 3 gezeigte Einrichtung in kleinerem Maßstab und in Arbeitsposition,

Fig. 5a, 6a, 7a und 8a eine Ansicht eines erfindungsgemäßen Kunststoffhalters mit spatenförmigem Dorn in Achsrichtung der Aufnahme, in verschiedenen Stadien während des Einschließens in ein Aluminiumblech,

Fig. 5b, 6b, 7b und 8b jeweils eine Seitenansicht von Fig. 5a, 6a, 7a und 8a, und

Fig. 9 einen Schnitt durch den Halteabschnitt eines voll eingeschlossenen Kunststoffhalters längs der Linie IX-IX in Fig. 8b.

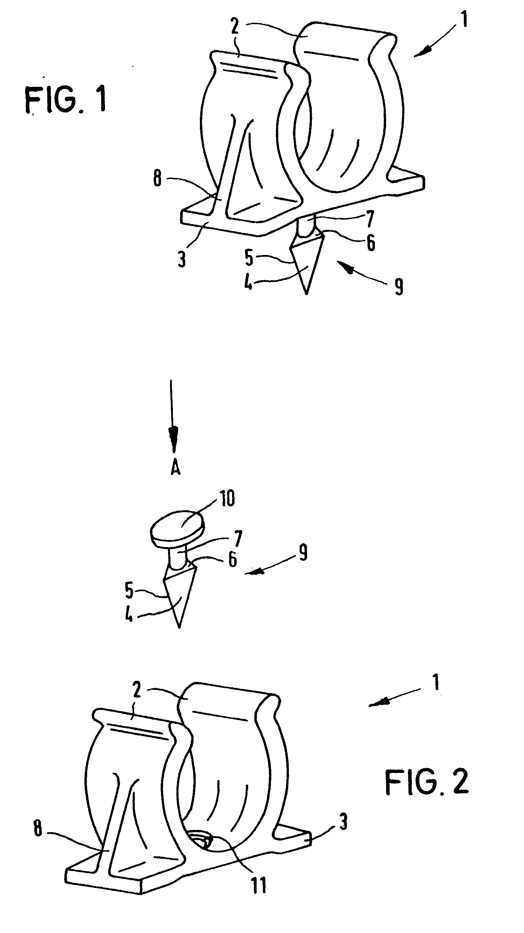

Fig. 1 zeigt einen Halter 1 aus Polycarbonat, der zwei federnd ausgebildete, oben offene Klemmbacken 2 zum Ergreifen eines Kunststoffrohres ausbildet. Die Klemmbacken 2 sind einteilig mit einer federnden Auflageplatte 3 verbunden. Seitliche Versteifungen 8 verleihen den Klemmbacken 2 die erforderliche Steifigkeit. Die Auflageplatte ist mit ihren beiden Enden nach unten gerichtet und somit leicht gewölbt.

Auf der den Klemmbacken 2 abgewandten Seite der Auflageplatte 3 ist senkrecht zu dieser mittig ein Befestigungsdorn 9 angeformt, welcher im Abstand von der Auflageplatte 2 eine steil pyramidenförmige Spitze 4 besitzt. Die Basisfläche 6 der pyramidenförmigen Spitze 4 ist über einen runden Schaft 7, dessen Durchmesser kleiner ist als der Inkreis der Basis 6, mit der Auflageplatte 3 verbunden.

Die Seitenkanten der Spitze 4 sind als Schneidekanten 5 ausgebildet. Die Höhe der Spitze beträgt 10 bis 12 mm, die Basis bildet ein gleichseitiges Dreieck mit einer Schenkellänge von 6 bis 7 mm, der Schlankheitsgrad beträgt etwa 1,6 bis 1,7, der Durchmesser des Schaftes 7 beträgt z. B. 3 mm und die Länge des Schaftes 7 beträgt 2,5 bis 3 mm. Der Halter 1 ist somit für alle beim Bau von Fußbodenheizungen gängigen Stärken des Wärmeleitblechs eingerichtet.

Die angegebenen Maße gewährleisten in Verbindung mit einem harten Kunststoff ein einwandfreies Eintreiben durch das nachgiebig auf dem Schaumstoff gelagerte Aluminiumblech.

Die Spitze soll nicht abgerundet sein, sondern scharf zulaufen.

Die zum Hindurchtreiben des Halters 1 durch ein halbhartes Aluminiumblech von etwa 0,5 mm Dicke erforderliche Arbeit beträgt zwischen 20 und 30 cmkp.

In Fig. 2 ist eine zweiteilige Ausführungsform des Halters 1 gezeigt. Mit der Ausführungsform der Fig. 1 übereinstimmende Ausbildung sind mit dem jeweils gleichen Bezugszeichen bezeichnet und nachfolgend nicht näher erläutert.

Wie aus der Zeichnung ersichtlich ist, ist der Befestigungsdorn 9 ein von Klemmbacken 2 und Auflageplatte 3 getrenntes Bauteil und ist bevorzugt aus ausreichend hartem Metall ausgeführt.

An dem der Spitze 4 entgegengesetzten Ende des Schaftes 7 ist eine Druckplatte 10 angebracht, welche eine flanschartige Verbreiterung bildet und wesentlich größer ist als der Inkreis der Basis 6. An der Anbringungsstelle des Befestigunsdorns 9 ist durch die Grundplatte 3 hindurchgehend ein Loch 11 ausgebildet bzw. eingespritzt, durch welches die Spitze 4 des Befestigungsdornes 9 in Richtung des Pfeiles A hindurchgeführt werden kann. An der Oberseite ist das Loch 11 derart abgesetzt, daß die flanschartige Druckplatte 10 des Befestigungsdornes 9 nicht die Innenoberfläche der Klemmbacken 2 überragt.

Die Größe des Loches 11 kann derart bemessen sein, daß dieses Loch beim Eindrücken des Befestigungsdornes 9 durch die Schneidkanten 5 der Spitze 4 aufgeweitet wird und anschließend wieder derart zurückfedert, daß der Befestigungsdorn 9 nicht mehr aus dem Loch 11 herausfallen kann.

Die Abmessungen des gezeigten Befestigungsdornes 9 stimmen mit jenen der in Fig. 1 gezeigten Ausführungsform überein.

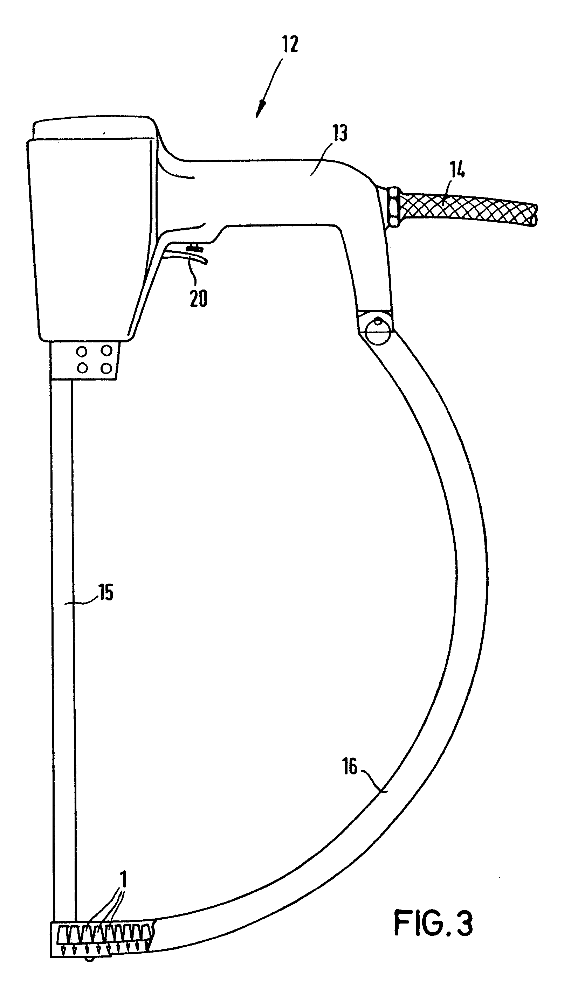

In Fig. 3 ist eine pneumatische Setzvorrichtung 12 zum Anbringen der Halter 1 gezeigt. Die Vorrichtung 12 umfaßt einen im Betrieb horizontalen Handgriff 13, der vom Preßluftmotor abragt und in welchen ein Druckluftschlauch 14 mündet. Senkrecht zum Handgriff 13 erstreckt sich vom Motor eine rohrartige Setzkolbenführung 15, in welche an ihrem freien Ende das Ende eines Magazines 16 einmündet. Das Magazin 16 ist teilweise geschnitten gezeigt und enthält mindestens ca. 50 Halter 1. Das aus flexiblen Material bestehende Magazin 16 ist, wie erkennbar, nach oben gebogen und an einem Vorsprung des Handgriffs 13 lösbar befestigt. Die Setzkolbenführung ist so lang, daß das Gerät im Stehen betätigt werden kann, um Halter in eine Fußbodenschicht einzutreiben.

Wie erkennbar ist, enthält das Magazin 16 Halter 1 der in Fig. 1 gezeigten Ausführungsform bzw. Halter 1 der in Fig. 2 gezeigten Ausführungsform mit bereits eingesetztem Befestigungsdorn 9. Es ist aber auch möglich, die Setzvorrichtung mit einem zweiten Magazin auszustatten, welches die Befestigungsdorne 9 der Ausführungsform gem. Fig. 2 gesondert von den übrigen Kunststoffteilen des Halters 1 zuführt und das Einpressen des Dornes 9 sowohl in den Kunststoffteil des Halters 1 als auch in das darunterliegende Aluminiumblech in einem einzigen Arbeitsgang vornimmt.

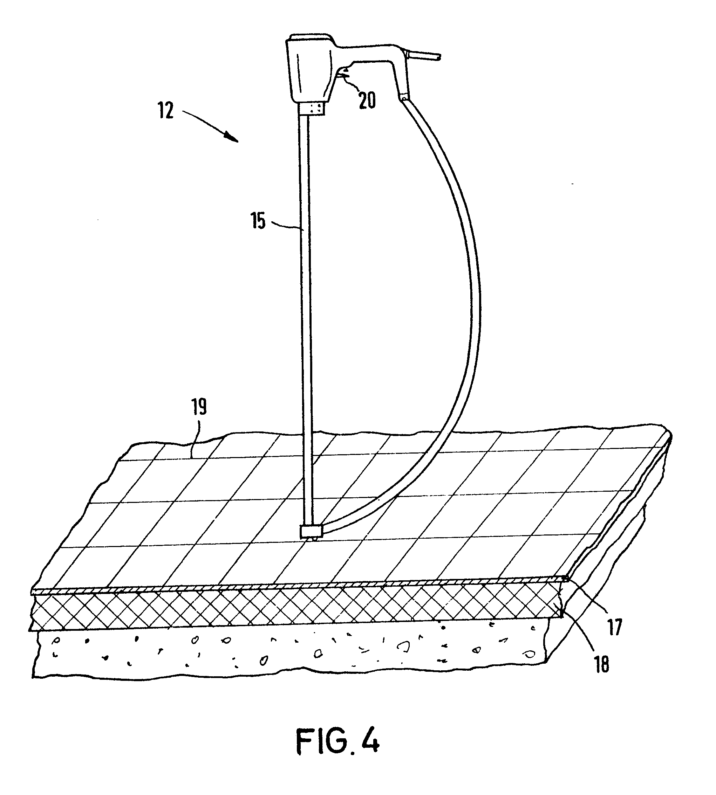

Die Arbeitsweise der in Fig. 3 gezeigten Vorrichtung ist aus Fig. 4 ersichtlich. In Fig. 4 ist im Schnitt der Boden eines Rohbaus dargestellt, auf welchem eine Wärmedämmschicht 18 aufgebracht ist. Die freie Oberfläche der Wärmedämmschicht 18 ist mit einem Aluminiumblech 17 beklebt, welche ein Rastermuster 19 bzw. eine mit diesem Rastermuster versehene Dampfsperrfolie trägt.

Die Vorrichtung 12 wird mit dem freien Ende der Setzkolbenführung etwa senkrecht zum Aluminiumblech auf die gewünschte Befestigungsstelle aufgesetzt. Zum Befestigen wird auf den Handgriff 13 ein Druck ausgeübt und gleichzeitig der Abzug 20 betätigt. Ein, z. B. elektrisch, von Hand oder auch preßluftbetriebener Setzkolben ergreift den am Ende des Magazins liegenden Halter 1 und übt auf den Grund der von den beiden Klemmbacken 2 gebildeten Vertiefung bzw. auf die Druckplatte 10 des Metall-Befestigungsdornes 9 der Fig. 2 eine Kraft aus, die ausreicht, um die Spitze 4 des Dornes 9 durch das Aluminiumblech 17 hindurchzutreiben, ohne daß dieses an der Befestigungsstelle nennenswert eingebeult wird.

Die große Anzahl von Haltern 1, die im Magazin 16 untergebracht sind, ermöglicht es, daß mit der gezeigten Vorrichtung die Halter für das Kunststoff-Rohrsystem einer gesamten Heizfläche (Fußboden oder Seitenwand) gesetzt werden können, ohne daß ein Nachfüllen oder Auswechseln des Magazins erforderlich ist.

Die Setzvorrichtung eignet sich auch zum Setzen der nachfolgend erläuterten Halter, deren Spitze in Form einer Querschneide ausgebildet ist.

Der in der Zeichnung gezeigte Halter 21 weist die gleiche Aufnahme wie der Halter 1 auf und kann aus dem gleichen Material bestehen.

Auf der Unterseite weist die Rohraufnahme 22 des Halters 21 ebenfalls eine gewölbte Anlage 32 auf, welche derart nach oben durchgebogen ist, daß sie mit ihren beiden seitlichen Schenkeln über ihren mittleren Abschnitt vorsteht. Die Anlage 32 ist an jedem ihrer Enden über jeweils eine Aussteifung 34 mit dem zugehörigen Schenkel der Aufnahme 22 verbunden.

In der Mitte der Anlage sind nach unten aufeinanderfolgend ein Halteabschnitt 30, ein Hals 23 und ein Dorn 24 angebracht. Der Dorn 24 weist die Form eines steilen Giebeldaches auf, dessen First eine Dornschneide 27 bildet. Die beiden Dornflanken 26 schließen an den Schmalseiten des Dornes 24 jeweils an eine Dornstirnfläche 28 an, die die Form eines gleichschenkeligen Dreiecks aufweist, dessen Spitze einen Winkel von etwa 45° aufweist. Der Dorn hat also in seiner bevorzugten Ausführung die Form eines Keils.

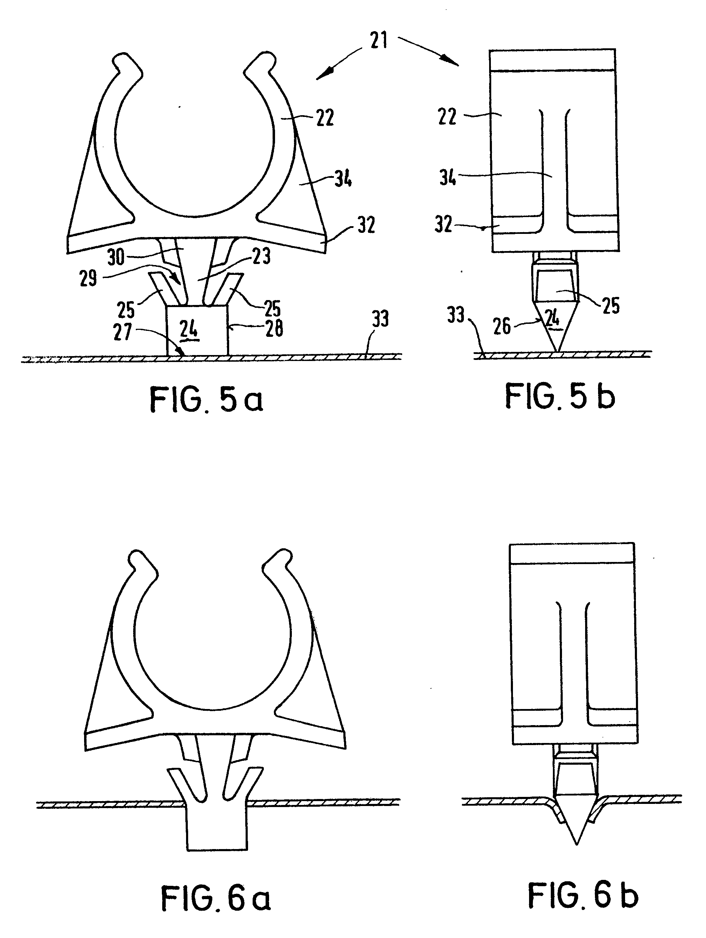

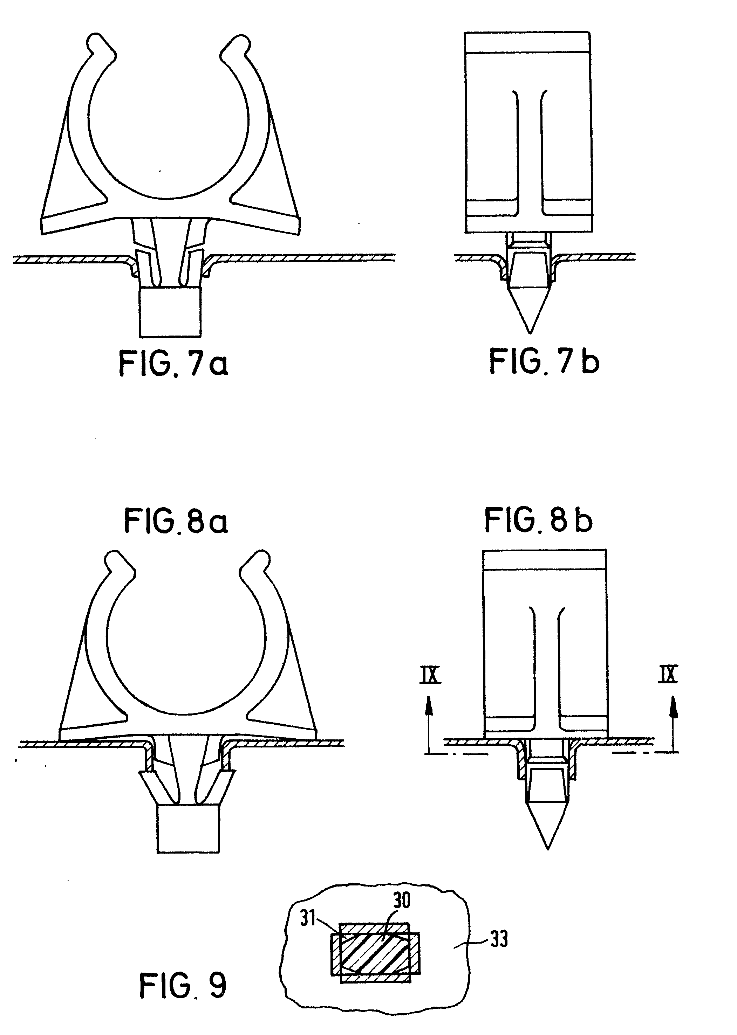

Am oberen Ende weist der Dorn 24, an die beiden Dornstirnflächen 28 jeweils angrenzend, zwei Widerhaken 25 auf, welche einstückig und federnd mit dem Dorn 24 verbunden sind und im Ruhestand die in Fig. 5a gezeigte Lage einnehmen. Wie aus Fig. 5b entnehmbar ist, weisen die Widerhaken 25 ihre breiteste Stelle an ihrem Übergang in die jeweilige Dornstirnfläche 28 auf, verjüngen sich aber nach oben, um zu verhindern, daß sich die Widerhaken 25 beim fertig eingesetzten Dorn (Fig. 8a, b) im Bereiche eine Ecke der Perforation 31 (Fig. 9) abstützen.

Der Hals 23 und der Halteabschnitt 30 weisen in Querrichtung der Dornschneide 27 gesehen etwa die gleiche Breite wie die Endfläche des Dornes 24 auf; der Hals 23 ist jedoch, in Längsrichtung der Dornschneide 27 gesehen, beiderseits unter Bildung einer Ausnehmung 29 ausgespart, welche derart bemessen ist, daß die Widerhaken 25 beim Eintreiben des Dornes in die jeweilige Ausnehmung 29 einfedern können (Fig. 7a). Der an die Anlage 32 angrenzende Halteabschnitt 30 weist dagegen, in Längsrichtung der Dornschneide 27 gesehen, etwa die gleiche Länge auf wie die obere Endfläche des Dornes 24.

.Der Dorn 24 weist im Normalschnitt zu seiner Längsrichtung im wesentlichen rechteckigen Querschnitt auf. Im Gegensatz hierzu ist der in Fig. 9 gezeigte Querschnitt durch den Halteabschnitt 30 als Rechteck mit abgeschrägten Kanten ausgebildet.

Das Eintreiben des Halters 21 in ein Aluminiumblech 33 ist sequenzartig in der Zeichnung dargestellt: Zunächst wird die Dornschneide 27 auf das Aluminiumblech 33 aufgesetzt, wobei sich Schneide 27 und Blech 33 in Linienberührung befinden. Durch Ausüben eines Drucks in Längsrichtung des Halses 23 dringt die Schneide 27 in das Blech 33 ein (Fig. 5a, 5b).

Beim weiteren Eindrücken des Halters in das Aluminiumblech 33 entsteht zunächst ein linienförmiger Einschnitt, der dann aber beim weiteren Eindringen des Dornes 24 durch dessen Flanken 26 auseinandergebogen wird. (Fig. 6a, 6b), wobei die gegen die Flanken 26 anliegenden Ränder der Perforation 31 (Fig. 9) nach unten umgebogen bzw. umgebördelt werden. Gleichzeitig findet quer zu den umgebogenen Perforationskanten an deren Enden ein Einreißen statt (nicht dargestellt).

Beim weiteren Eindrücken des Dornes federn die Widerhaken 25 in der Ausnehmung 29 zurück, wobei die Widerhaken jedoch derart beschaffen sind, daß sie nicht ganz in die Ausnehmungen 29 einfedern, sondern vielmehr mit ihren an den Querrändern der Perforation 31 anliegenden Außenflächen derart zum Halteabschnitt 30 hin divergieren, daß sie bei weiterem Eindringen des Halters auch die letztgenannten Perforationskanten auseinanderdrücken und hierbei nach unten umbördeln (Fig. 7a, 7b).

Wenn der Halter 21 weiter eingedrückt wird, dann berührt er zunächst mit den beiden Enden der Anlage 32 die Oberfläche des Bleches 33, und dann wird die nachgiebige Anlage 32 so lange flachgedrückt, bis die Widerhaken 25 über die umgebördelten, benachbarten Perforationskanten überspringen und sich auf diesen abstützen (Fig. 8a, 8b).

In dieser Stellung stützt sich der Halter 21 mit dem Halteabschnitt 30 an den vier umgebördelten Rändern der Perforation ab (Fig. 9), wobei jedoch die Ecken des Querschnitts des Halteabschnitts abgeschrägt sind, um einerseits zu verhindern, daß Auflagestellen im Eckenbereich der Perforation 31 gebildet werden, und andererseits eine gewisse Drehbarkeit des Halteabschnitts und damit auch des Halters 21 zu erreichen, wenn dieser bereits fest in das Blech 33 eingesetzt ist.

Die Seitenflächen des Halteabschnitts 30, die in Anlage mit den umgebördelten Rändern der Perforation 31 gelangen, sind, von der dem Dorn 24 zugewandten Unterseite aus beginnend, nach oben jeweils nach außen leicht geneigt, so daß der Halteabschnitt 30 stramm in der Perforation 31 sitzt.

Der gezeigte Halter 1, ist einstückig aus Polypropylen gebildet und zum Eintreiben durch ein halbhartes Aluminiumblech von zirka 0,5 mm Dicke ausgelegt.

## Patentansprüche

1. Verfahren zum Befestigen von wenigstens und vorzugsweise einen Befestigungsdorn mit hinterschnittener Spitze aufweisenden Haltern für biegsame Kunststoffrohre an der aus einem Aluminiumblech gebildeten, oberen Abdeckung der unteren Schaumkunststoff-Isolierung einer Fußbodenheizung, wobei die Befestigungsspitze des Halters jeweils so tief durch ein Loch des Aluminiumblechs gesteckt wird, daß die Hinterschneidung sich unterhalb des Aluminiumbleches befindet, dadurch gekennzeichnet, daß die Halter (1) durch das an der Einsteckstelle ungelochte Aluminiumblech (17) hindurchgetrieben werden.

2. Verfahren nach Anspruch 1, dadurch gekennzeichnet, daß auf das Aluminiumblech (17) vor dem Eintreiben des Dornes (9) eine mit einem fluchtende Punkte für das Eintreiben der Dorne markierenden Raster (19) bedruckte Folie aufgebracht wird.

3. Mit einem Aluminiumblech kaschierte Schaumstoffisolierplatte zur Durchführung des Verfahrens nach Anspruch 1, dadurch gekennzeichnet, daß das Aluminiumblech (17) ein Raster (19) trägt, welches fluchtende Punkte für das Eintreiben der Dorne (9) markiert.

4. Halter zum Befestigen nach dem Verfahren nach einem der Ansprüche 1 und 2, mit einem angespitzten, hinterschnittenen Befestigungsdorn, dadurch gekennzeichnet, daß der Befestigungsdorn (9) mindestens an der Spitze (4) aus hartem Werkstoff und mit Schneidkanten (5) ausgebildet ist.

5. Halter nach Anspruch 4, dadurch gekennzeichnet, daß der Befestigungsdorn (9) mindestens an der Spitze (4) aus einem Material mit höherer Festigkeit als das Aluminiumblech (17) gebildet ist und in den Halter (1) aus Kunststoff eingespritzt oder eingesteckt ist.

6. Halter nach Anspruch 4, dadurch gekennzeichnet, daß der Befestigungsdorn (9) einstückig mit dem Halter (1) aus einem harten Kunststoff gespritzt ist.

7. Halter nach einem der Ansprüche 4 bis 6, dadurch gekennzeichnet, daß die Spitze (4) des Befestigungsdornes (9) mit drei Schneidkanten (5) ausgebildet ist und die Form einer Pyramide mit einem Schlankheitsgrad von ca. 1,6 bis 1,7 hat.

8. Halter nach einem der Ansprüche 4 bis 6, dadurch gekennzeichnet, daß der Dorn (24) schneideförmig ausgebildet ist und an den rückwärtigen Enden seiner Schmalseiten (28) elastische, nach außen geneigte Widerhaken (25) trägt.

9. Halter nach Anspruch 8, dadurch gekennzeichnet, daß der schneideförmige Dorn (24) als Keil ausgebildet ist, der die Form eines sehr steilen Giebeldaches hat.

10. Halter nach Anspruch 8 oder 9, dadurch gekennzeichnet, daß ein den Dorn (24) tragender Hals (23) neben sich Platz zum Einfedern der Widerhaken (25) hinter die Kontur des Dornendes läßt und von einem an die Aufnahme (22) angrenzenden Halteabschnitts (30) abragt, dessen Querschnitt zur Abstützung des Halters (21) in der Perforation (31) etwa dem Querschnitt des Dornendes entspricht.

11. Halter nach einem der Ansprüche 8 bis 10, dadurch gekennzeichnet, daß die Schneide (27) des schneideförmigen Dornes (24) senkrecht zur Mittelachse des Dornes verläuft.

12. Halter nach einem der Ansprüche 8 bis 11, dadurch gekennzeichnet, daß der gegenseitige Abstand der Außenflächen der Widerhaken (25) vom rückwärtigen Ende des Dornes (24) aus zum Halteabschnitt (30) hin divergiert.

13. Halter nach einem der Ansprüche 4 bis 12, dadurch gekennzeichnet, daß der Halter (1, 21) eine federnde Auflageplatte (3, 32) aufweist, die sich quer zum Befestigunsdorn (9, 24) erstreckt und auf ihrer diesem zugewandten Seite konkav ausgebildet ist.

14. Gerät zur Durchführung des Verfahrens nach einem der Ansprüche 1 und 2, insbesondere zum Eintreiben eines Halter nach einem der Ansprüche 4 bis 12, mit einem Handgriff (13) zum Halten des Geräts, einer Setzkolbenführung (15), einem in dieser geführten Setzkolben zum Eintreiben von Haltern in die Isolierplatte, einem am freien Ende der Setzkolbenführung (15) einmündenden Magazin (16) für die Halter, welches den jeweiligen am Magazinende befindlichen Halter (1, 21) der Einwirkung des Setzkolbens darbietet, und einem mittels eines Abzugsbügels (20) auslösbaren Antrieb für den Setzkolben, dadurch gekennzeichnet, daß die Setzkolbenführung (15) eine ausreichende Länge besitzt, um das Erfassen und Benützen des Gerätes zum Eintreiben von Haltern in die auf dem Boden liegende Wärmedämmschicht durch einen stehenden Menschen zuzulassen und daß das Magazin (16) ein nach oben gekrümmtes Stangenmagazin ist.

15. Gerät nach Anspruch 14, dadurch gekennzeichnet, daß das rückwärtige Ende des Stangenmagazins (16) am Handgriff (13) des Geräts befestigt ist.

## Claims

1. A method of securing holders for flexible plastics pipes, which holders comprise at least and preferably one fixing pin with an undercut tip, to the upper covering, formed from a sheet of aluminium, of the lower foam plastics insulation of underfloor heating, wherein the fixing tip of the holder is inserted so deep through a hole in the aluminium sheet in each case that the undercut is below the aluminium sheet, characterized in that the holders (1) are driven through the aluminium sheet (17) which is unperforated at the insertion point.

2. A method as claimed in claim 1, characterized in that a foil printed with a grid (19), marking aligned points for the driving in of the pins, is applied to the aluminium sheet (17) before the driving in of the pin (9).

3. An insulation foam slab covered with an aluminium sheet for carrying out the method as claimed in claim 1, characterized in that the aluminium sheet (17) carries a grid (19) which marks aligned points for the driving in of the pins (9).

4. A holder for securing by the method as claimed in one of the claims 1 and 2, having a pointed, undercut fixing pin, characterized in that the fixing pin (9) is constructed of hard material at least at the tip (4) and with cutting edges (5).

5. A holder as claimed in claim 4, characterized in that the fixing pin (9) is formed, at least at the tip (4), from a material having a greater strength that the aluminium sheet (17) and is injection-moulded or inserted in the holder (1) of plastics material.

6. A holder as claimed in claim 4, characterized in that the fixing pin (9) is injection-moulded integral with the holder (1) of a hard plastics material.

7. A holder as claimed in one of the claims 4 to 6, characterized in that the tip (4) of the fixing pin (9) is constructed with three cutting edges (5) and has the shape of a pyramid with a slenderness ratio of about 1.6 to 1.7.

8. A holder as claimed in one of the claims 4 to 6, characterized in that the pin (24) is constructed in the form of a knife-edge and carries resilient, outwardly inclined barbs at the rear ends of its narrow sides (28).

9. A holder as claimed in claim 8, characterized in that the knife-edge-shaped pin (24) is constructed in the form of a wedge which has the shape of a very steep gable roof.

10. A holder as claimed in claim 8 or 9, characterized in that a neck (23) carrying the pin (24) leaves room beside it for the springing in of the barbs (25) behind the contour of the end of the pin and projects down from a holding portion (30) which is adjacent to the receiver (22) and the cross-section of which, to support the holder (21) in the perforation (31), corresponds substantially to the cross-section of the end of the pin.

11. A holder as claimed in one of the claims 8 to 10, characterized in that the cutting edge (27) of the knife-edge-shaped pin (24) extends perpendicular to the central axis of the pin.

12. A holder as claimed in one of the claims 8 to 11, characterized in that the mutual spacing of the outer faces of the barbs (25) diverges from the rear end of the pin (24) towards the holding portion (30).

13. A holding as claimed in one of the claims 4 to 12, characterized in that the holder (1, 21) comprises a resilient supporting plate (3, 32) which extends transversely to the fixing pin (9, 24) and is concave in construction at its side adjacent to this.

14. An implement for carrying out the method as claimed in one of the claims 1 and 2, particularly for driving in a holder as claimed in one of the claims 4 to 12, having a handle (13) to hold the implement, a rammer-head guide (15), a rammer head guided therein to drive holders into the insulating slab, a magazine (16), discharging at the free end of the rammer-head guide (15), for the holders, which magazine offers the particular holder (1, 21) present at the end of the magazine to the action of the rammer-head, and a drive for the rammer-head which drive can be triggered by means of a trigger-bail (20), characterized in that the rammer-head guide (15) has a sufficient length to permit the grasping and using of the implement for driving in holders into the layer of thermal insulation lying on the floor by a standing man and that the magazine (16) is a rod magazine curved upwards.

15. An implement as claimed in claim 14, characterized in that the rear end of the rod magazine (16) is secured to the handle (13) of the implement.

## Revendications

1. Procédé pour fixer des supports de tuyaux flexibles en matière plastique présentant au moins, et de préférence, un poinçon de fixation comportant une pointe munie d'un épaulement arrière, sur le revêtement supérieur formé d'une tôle d'aluminium d'une isolation inférieure en matière cellulaire d'un chauffage de plancher, la pointe de fixation du support étant à chaque fois enfoncée dans un trou de la tôle d'aluminium suffisamment profondément pour que l'épaulement arrière se trouve en-dessous de la tôle d'aluminium, caractérisé par le fait que les supports (1) sont amenés à traverser la tôle d'aluminium (17) non percée à l'emplacement d'enfoncement.

2. Procédé selon la revendication 1, caractérisé par le fait que l'on met en place sur la tôle d'aluminium (17), avant l'enfoncement du poinçon (9), une feuille imprimée d'un quadrillage (19) de repérage de points alignés pour l'enfoncement des poinçons.

3. Plaque d'isolation en matière cellulaire revêtue d'une tôle d'aluminium pour la mise en oeuvre du procédé selon la revendication 1, caractérisée par le fait que la tôle d'aluminium (17) porte un quadrillage (19) qui repère des points alignés pour l'enfoncement des poinçons (9).

4. Support pour une fixation selon le procédé selon l'une des revendications 1 et 2, comprenant un poinçon de fixation pointu présentant un épaulement arrière, caractérisé par le fait que le poinçon de fixation (9), au moins à la pointe (4), est réalisé en matière dure et muni d'arêtes de coupe (5).

5. Support selon la revendication 4, caractérisé par le fait que le poinçon de fixation (9), au moins à la pointe (4), est réalisé en une matière ayant une résistance mécanique plus élevée que la tôle d'aluminium (7) et est injecté ou enfiché dans le support (1) en matière plastique.

6. Support selon la revendication 4, caractérisé par le fait que le poinçon de fixation (9) est réalisé d'un seul tenant par injection avec le support (1) en une matière plastique dure.

7. Support selon l'une des revendications 4 à 6, caractérisé par le fait que la pointe (4) du poinçon de fixation (9) est pourvue de trois arêtes de coupe (5) et présente la forme d'une pyramide ayant un rapport d'allongement d'environ 1,6 à 1,7.

8. Support selon l'une des revendications 4 à 6, caractérisé par le fait que le poinçon (24) est réalisé en forme de lame et porte sur les extrémités arrières de ses petits côtés (28) des barbes (25) élastiques inclinées vers l'extérieur.

9. Support selon la revendication 8, caractérisé par le fait que le poinçon en forme de lame (24) est réalisé sous forme d'un coin qui possède la forme d'un pignon de toit très pointu.

10. Support selon la revendication 8 ou 9, caractérisé par le fait qu'un col (23) portant le poinçon (24) laisse à côté de lui de la place pour la compression élastique des barbes (5) derrière le contour de l'extrémité de poinçon et fait saillie d'un tronçon de retenue (30) adjacent à l'élément de réception (22) et dont la section correspond sensiblement à la section de l'extrémité de poinçon pour l'appui du support (21) dans la perforation (31).

11. Support selon l'une des revendications 8 à 10, caractérisé par le fait que l'arête de coupe (27) du poinçon en forme de lame (24) s'étend perpendiculairement à l'axe médian du poinçon.

12. Support selon l'une des revendications 8 à 11, caractérisé par le fait que la distance mutuelle des surfaces extérieures des barbes divergent de l'extrémité arrière du poinçon (24) vers le tronçon de retenue (30).

13. Support selon l'une des revendications 4 à 12, caractérisé par le fait que le support (1, 21) présente une plaque d'appui élastique (3, 32) qui s'étend perpendiculairement au poinçon de fixation (9, 24) et présente une forme concave sur son côté tourné vers celui-ci.

14. Outil pour la mise en oeuvre du procédé selon l'une des revendications 1 et 2, en particulier pour l'enfoncement d'un support selon l'une des revendications 4 à 12 comprenant une poignée (13) pour la préhension de l'outil, un guide de piston d'enfoncement (15), un piston d'enfoncement guidé dans celui-ci pour l'enfoncement de supports dans la plaque isolante, un magasin (16) pour les supports, débouchant à l'extrémité libre du guide du piston d'enfoncement (15), et présentant à l'action du piston d'enfoncement, le support (1, 21) se trouvant à chaque fois à l'extrémité du magasin, et un mécanisme d'entraînement actionnable par une détente (20) pour le piston d'enfoncement, caractérisé par le fait que le guide du piston d'enfoncement (15) possède une longueur suffisante pour permettre la tenue et l'utilisation de l'outil pour enfoncer des supports dans la couche d'isolation thermique se trouvant sur le sol par un homme debout, et que le magasin (16) est un magasin en forme de tige cintrée vers le haut.

15. Outil selon la revendication 14, caractérisé par le fait que l'extrémité arrière du magasin en forme de tige (16) est fixée sur la poignée (13) de l'outil.

FIG. 1

FIG. 2

FIG.3

FIG.4

FIG. 5 a

FIG. 5 b

FIG. 6 a

FIG. 6 b

17

FIG. 7 a

FIG. 7 b

FIG. 8 a

FIG. 8 b

FIG. 9